(19) Europäisches Patentamt
European Patent Office
Office européen des brevets

(11) Publication number: **0 169 073**
**A2**

(12) # EUROPEAN PATENT APPLICATION

(21) Application number: **85305133.2**

(22) Date of filing: **18.07.85**

(51) Int. Cl.⁴: **G 02 B 6/38**

(30) Priority: **18.07.84 US 631966**

(43) Date of publication of application: **22.01.86**
**Bulletin 86/4**

(84) Designated Contracting States: **DE FR GB**

(71) Applicant: **CELANESE CORPORATION, 1211 Avenue of the Americas, New York New York 10036 (US)**

(72) Inventor: **Holt, Anne, 523 Clark Street, Westfield New Jersey (US)**
Inventor: **Mekkaoui, Abdallah M., 1365 North Avenue, Elizabeth New Jersey (US)**

(74) Representative: **De Minvielle-Devaux, Ian Benedict Peter et al, CARPMAELS & RANSFORD 43, Bloomsbury Square, London WC1A 2RA (GB)**

(54) **Components for joining or terminating optical fibers.**

(57) The invention relates to components for joining or terminating optical fibers which are molded from a thermotropic liquid crystalline polymer having a linear coefficient of thermal expansion (LCTE) of from -5 to 10 micrometer/meter-°C, over a temperature range of from about -50°C to about 85°C, and preferably a linear coefficient of thermal expansion matching that of the optical fiber incorporated in the component.

EP 0 169 073 A2

ACTORUM AG

# COMPONENTS FOR JOINING OR TERMINATING OPTICAL FIBERS

This invention relates to components and procedures for making low-loss connections for optical fibers and optical devices. More particularly, this invention relates to components for joining or terminating optical fibers such as optical fiber connectors, optical fiber splices,optical fiber couplers, etc. made from certain thermotropic liquid crystalline polymers.

The prior optical fiber art teaches various procedures with the objective of obtaining low-loss connections between lengths of fibers, i.e., between lengths of single fibers, lengths of multiple fiber bundles, in multiplexing and demultiplexing, etc.

One way of connecting fibers is simply to press the ends of the fibers together by means of a connector, for which various designs are known in the art. The ends of the fibers may be first prepared by polishing, or breaking, or slicing to obtain a more-uniform defect-free surface that results in lower loss. Another means of reducing connection loss are lenses attached to the ends of the fibers, or index matching fluids that fill the gap between the ends of the fibers. Another technique which avoids many of the problems concomitant with employing index matching fluids is the use of a transparent flexible index matching dome of plastic material, such as silicone rubber, that adheres to the ends of the connectors and bridges the gap between the ends of the fibers. Thus,fiber optic connectors essentially have been devices for physically bringing the ends of two of more fibers together closely and accurately enough so as to minimize the disturbance of the optical waveguide geometry of the fibers as light passes from one to the other and avoid attenuation or loss as measured in decibels (dB). Disadvantageously, except for those situations involving very large diameter fibers, extreme

mechanical property tolerances have been required. In particular, connectors intended for small core communications-grade fibers with less than 1 decibel (dB) loss have been possible only by using very expensive components which require individua attention to machining and aligning of the various parts.

A serious cause of attenuation or decibel loss in a fiber optic system is caused by scattering, i.e. light escaping the bound modes of the optical fiber. It generally consists of three types: intrinsic,inhomogeneity of the glass or plastic optic fiber and aberrations in the radial form of the refractive index. One cause of such scattering is the influence of lateral forces (microbending) on the optical fibers which is evidenced by a significant decrease or disruption of the transition through the fiber at site of the lateral force. It has also been demonstrated that this effect is reversible. The disadvantageous influence of lateral forces can be attributed to displacement of the cladding or sheath with respect to the optic fiber core by the applied forces, thus disturbing the total reflection and causing scattering and, as a consequence, decreasing or attenuating the transmission.

Another cause for excessive losses in fiber optic connectors is caused by alignment difficulties. In fiber optics, it is found that variations in the axial direction of the connector must be critically controlled because the light from the transmitting fiber is in the form of a cone and the amount of light coupled into the receiving fiber will decrease as the fibers move away from each other. This alignment of the fiber core creates the most loss, while angular misalignment adds slightly to the total accumulated loss.

While the patent literature includes numerous fiber or fiber bundle connector or interface devices, none provide the advantageous device of the present invention.

U.S. Patent No. 3,861,781 of Hasegawa et al, issued January 21, 1975, discloses a cylindrical metal sleeve member to line two terminal members brought into contact with each other within said sleeve member.

U.S. Patent No. 3,870,395 of Schicketanz, issued March 11, 1975, discloses connecting two fibers within a capillary tube formed of a material having an index of refraction approximately equal to that of the cladding of the fibers being connected.

U.S. Patent No. 3,944,328 of Kent et al, issued March 16, 1976, discloses connecting two strands of optical fibers by means of a coupling member constituting a block of epoxy-resin plastic material. It is taught that this material must not transmit the radiation to be conducted by the optical fibers and/or must have a sufficiently smaller index of refraction than these fibers to avoid interfering with the total-reflection effect required for the waveguide action.

U.S. Patent No. 4,124,364 of Dalgoutte, issued November 7, 1978, discloses the joining of glass optical fibers by butting the fiber ends together in a sleeve made of a glass having a melting point lower than that of the silica fibers.

U.S. Patent No. 4,186,999 of Harwood et al, issued February 5, 1980, discloses a fiber optics connector, e.g., ferrule, which is made from an optical plastic, such as silicone rubber, which is similar to the cladding of the optical fibers utilized in conjunction with said ferrule.

U.S. Patent No. 4,196,965 of Matsumo, issued April 8, 1980, discloses a reinforcing connecting sleeve for optical fibers which is composed of an inner layer made of a fluorine containing resin having a refractive index which is smaller than that of the optical cable core and an outer layer which is made of metal.

U.S. Patent No. 4,352,542 of Tydings, issued October 5, 1982, discloses a connector constructed with a thin wall tube of beryllium copper enclosing three strips of a shaped memory alloy material such as nitinol alloy. The three strips are bent and inserted into the thin wall tube such that an axial cavity is formed between the three opposing bent radii of the strips thus providing a self-centering mechanism for positioning fiber optic cable ends along the central axis of the tube.

Outside the optical fiber art there have been disclosures of a wide variety of materials for various purposes. Among them are disclosures of a great variety of polymers. Among the polymer disclosures is the following :

The use of various fillers in conjunction with liquid crystalline polymers is disclosed in our U.S. Patent No. 4,067,852. This U.S. Patent teaches that fillers and /or reinforcing agents may be included in a total concentration of about 1 to 60% by weight of the resulting molding compound. Representative fibers which may serve as reinforcing media therein include glass fibers, asbestos, graphitic carbon fibers, amorphous carbon fibers, synthetic polymer fibers, aluminum fibers, aluminum silicate fibers, oxide of aluminum fibers, titanium fibers, magnesium fibers, rock wool fibers, steel fibers, tungsten fibers, cotton wool, and wood cellulose fibers,etc. If desired, the fibrous reinforcement may be preliminarily treated to improve its adhesion ability to the liquid crystalline polymer which ultimately serves as a continuous matrix phase. Representative filler materials disclosed in this U.S. Patent include calcium silicate, silica,clays, talc,mica, polytetrafluoroethylene, graphite, aluminum trihydrate, sodium aluminium carbonate and barium ferrite.

Our co-pending U.S. Patent Application Serial No. 464, 272, filed February 7, 1983, teaches the addition of wollastonite fibers to liquid crystalline polymers in amounts of

from 10 to 70% by weight.

Thus, the incorporation of various filler materials into liquid crystalline polymers has been investigated as shown above. However, there is no contemplation or disclosure of the use thereof in components for joining or terminating optical fibers.

It has now surprisingly been found that certain liquid crystalline polymers can be used to form highly advantageous components for joining or terminating optical fibers. It has also been found that the efficacy of these polymers may be controlled by incorporating appropriate amounts of filler materials in the polymer composition.

The invention provides a component for joining or terminating optical fibers which is a polymer molding, characterised in that the polymer is a thermotropic liquid crystalline polymer having a linear coefficient of thermal expansion of from -5 to 10 micrometer/meter -°C in the temperature range from -50°C to +85°C.

The linear coefficient of thermal expansion may be appropriately controlled by incorporating a filler material in the polymer in an amount in the range from 5 to 60% by weight of the total composition.

The invention makes it possible to obtain a number of significant advantages.

One advantage is the maintenance of coupling or connecting efficiency by the reduction of undesirable losses.

Other advantages will appear from the following description.

By providing a material which exhibits a linear coefficient of thermal expansion in the flow direction of molded articles compatible with optical fibers, it is

possible to reduce undesirable axial and lateral forces.

It is possible to achieve dimensional stability even under pronounced temperature variations.

It is possible to provide radiation resistance in addition to moisture and chemical resistance.

In accordance with one embodiment of the invention,a component for joining or terminating optical fibers is molded of a thermotropic liquid crystalline polymer which has a linear coefficient of thermal expansion (LCTE) of from -5 to 10 micrometer/meter-°C, preferably -3 to 6 micrometer/meter-°C, and most preferably has a linear coefficient of thermal expansion matching that of the fiber optic incorporated in the component of the present invention, in each instance over a temperature range of from -50°C to 85°C.

An important aspect is that the components employing the thermotropic liquid crystalline polymers of the present invention evidence little or no warpage and, thus, a minimum of induced internal stresses as compared to prior art materials.

In the preferred embodiment of this invention,the linear coefficient of thermal expansion is controlled by incorporating one or more filler materials in precise amounts with the liquid crystalline polymers. Various filler materials may be included in a total concentration of 5 to 60% and over by weight of the total material and preferably in a concentration of 10% to 30%. Representative filler inorganic materials include wollastonite, calcium silicate, silica,clays,talc, mica, polytetrafluoroethylene,graphite, sodium aluminum carbonate, and barium ferrite. Wollastonite and fused silica are the preferred materials. It is also contemplated that colorants, for example, carbon black can be added to the liquid crystalline materials of the present invention.

Components in accordance with the invention are illustrated in the drawings, in which:

Figure 1 depicts an in-line coupler comprising a coupling block containing the adjacent ends of two optical fibers and illustrates the flow direction of the molded coupling block relative to said optical fibers.

Figure 2 depicts a ferrule for use in connectors terminating optical cables and illustrates the flow direction of the molded ferrule relative to said optical cable.

The following description covers polymer materials and techniques for utilizing same which are suitable for use with the optical fiber components of the present invention. The components are employed for joining or terminating optical fibers. Used herein, the term "optical fiber" means those fibers that provide a propagation path for electromagnetic energy in the visible, infrared, or ultraviolet regions of the spectrum. The fibers most usually comprise a core with a sheath or cladding surrounding same. Glass and plastic are the most typical fiber core materials and the sheath or cladding may also comprise glass or plastic. Unless otherwise denoted, both single optical fiber cables and multiple fiber cables are included in the term "optical fiber". The term "optical device" includes sources,detectors, mixers, filters, and other devices operating in the visible, infrared, or ultraviolet regions of the electromagnetic spectrum, and the term "light" includes visible, infrared, and ultraviolet light. The term component means any device that either terminates one or more optical fibers, joins two or more optical fibers or joins one or more optical fibers to an optical device, etc. and includes, by way of example, optical fiber connectors, connector bodies,splicers, couplers,etc. The term "thermotropic" means a polymeric material which, on fusion, forms an ordered melt. The term "liquid crystalline polymer" means an anisotropic polymer

having a molecular weight of at least 1,000 and which is suitable for use as a molding resin.

An essential property of the optical fiber components according to the invention is that they are made of a thermotropic liquid crystalline polymer which exhibits a linear coefficient of thermal expansion of -5 to 10 micrometer/meter-°C, and preferably -3 to 6 micrometer/-meter-°C, in the flow direction of the molded components, over a range of temperatures of from -50°C to 85°C. It is especially preferred to utilize a thermotropic liquid crystalline polymer which has a linear coefficient of thermal expansion, i.e., in the flow direction, substantially equal to that of the optical fiber which is contained in and used in conjunction with the connector fabricated from said polymeric material. This linear coefficient of thermal expansion also should be substantially uniform over a temperature range of from -50°C to 85°C. In accordance with the invention, it is also important to align the optical fiber axially with the flow direction of the molded liquid crystalline polymer from which the component is fabricated.

Referring to Figure 1, the end portions of two optical fibers 1 and 2 are coupled end to end in mutual alignment by means of a coupling member consisting of a body 3 of the liquid crystalline polymer of the present invention. Shading lines 4 indicate the flow direction in the body 3 of the molded liquid crystalline polymer. In accordance with the invention, it is important that the optical fibers be positioned or aligned within said body 3 in the flow direction of the molded crystalline polymer.

Figure 2 shows a ferrule 10 having a fiber optic cable 12 positioned therein. The fiber optic cable 12 illustrated within the ferrule 10 is of a known type and includes jacketing material 14 surrounding an optical fiber 16 which is normally coated with a cladding material 18 having an index of refraction compatible with that of the fiber. In order to achieve

fully the benefits of the present invention, it is important that the fiber optic cable 12 and the optic fiber 16 contained therein be aligned axially with the flow direction of the molded liquid crystalline polymer which is represented by shading lines 20.

A second property of the components of this invention is that they are structurally sound over a wide range of conditions. For example, they evidence a minimum warpage, especially in the longitudinal or flow direction of the molded article, even when subjected to the wide temperature range, e.g. from -50 to 85°C, to which such products may be exposed.

Thirdly, the devices exhibit excellent radiation resistance, e.g., as evidenced by no significant deleterious effect on tensile and flexural properties when exposed to 500 megarads of Cobalt -60 gamma radiation.

The products of this invention also exhibit excellent moisture and chemical resistance. The polymer from which the components of the present invention is formed is a thermotropic liquid crystalline polymer which is of the requisite molecular weight to be capable of being molded, i.e. shaped by injection molding or melt extrusion or the like. Such thermotropic liquid crystalline polymers have been known in the art but have not prior to the present invention been recognized to be suitable for forming the presently claimed components for joining or terminating optical fibers which show the surprising physical and chemical properties discussed herein.

As is known in polymer technology, a thermotropic liquid crystalline polymer exhibits optical anisotropy in the melt. The anisotropic character of the polymer melt may be confirmed by conventional polarized light techniques wherein cross-polarizers are utilized. More specifically,

the anisotropic nature of the melt phase may conveniently be confirmed by the use of a Leitz polarizing microscope at a magnification of 40X with the sample on a Leitz hot stage and under a nitrogen atmosphere. The amount of light transmitted changes when the sample is forced to flow; however, the sample is optically anisotropic even in the static state. On the contrary, typical melt processable polymers do not transmit light to any substantial degree when examined under identical conditions.

Representative classes of polymers from which the thermotropic liquid crystalline polymer suitable for use in the present invention may be selected include wholly aromatic polyesters, aromatic-aliphatic polyesters, wholly aromatic poly (ester-amides), aromatic-aliphatic poly(ester-amides), aromatic polyazomethines, aromatic polyester-carbonates,and mixtures of the same. In preferred embodiments the thermotropic liquid crystalline polymer is a wholly aromatic(polyester, a wholly aromatic polyesteramide), or an aromatic-aliphatic poly (ester-amide). In such wholly aromatic polyester and wholly aromatic poly(ester-amide), each moiety present within the polymer chain contributes at least one aromatic ring. Also, it is preferred that naphthalene moieties be included in the thermotropic liquid crystalline polymer, e.g., 6-oxy-2-napthoyl moiety, 2,6-dioxynaphthalene moiety, or 2,6-dicarboxynaphthalene moiety, in a concentration of not less than 10 mole percent. The particularly preferred naphthalene moiety for inclusion in the thermotropic liquid crystalline polymer is the 6-oxy-2-naphthoyl moiety in a concentration of not less than 10 mole percent.

Representative wholly aromatic polyesters which exhibit thermotropic liquid crystalline properties include those disclosed in the following United States Patents:

3,991,013; 3,991,014; 4.066,620; 3,067,851;3,075,262;
4,083,829; 4,093,595; 4,118,372; 4,130,545; 4,146,702;
4,153,779; 4,156,070; 4,159,365; 4,161,470; 4,169,933;
4,181,792; 4,183,895; 4,184,996; 4,188,476; 4,201,856;
4,219,461; 4,224,433; 4,226,970; 4,230,817;
4,232,143; 4,232,144; 4,238,598; 4,238,599; 4,238,600;

4,242,496; 4,245,082; 4,245,084; 4,247,514; 4,256,624; 4,265,802; 4,267,304; 4,269,965; 4,279,803; 4,299,756; and 4,294,955; and in our United States Serial Nos. 91,003, filed November 5, 1979; 169,014, filed July 15, 1980; (corresponding to EPA 81303161.4); 194,196, filed October 6, 1980, (corresponding to EPA 81304568.9) and 270,440 filed June 4, 1981 (corresponding to EPA 82302835.2). As discussed hereinafter the wholly aromatic polyester of U.S. Patent 4,161,470 is particularly preferred for use in the present invention.

Representative aromatic-aliphatic polyesters which exhibit thermotropic liquid crystalline properties are copolymers of polyethylene terephthalate and hydroxybenzoic acid as disclosed in Polyester X-7G-A Self Reinforced Thermoplastic, by W.J. Jackson, Jr., H.F. Kuhfuss, and T.F. Gray,Jr., 30th Anniversary Technical Conference, 1975 Reinforced Plastics/ Composites Institute, The Society of the Plastic Industry, Inc., Section 17-D, Pages 1-4. A further disclosure of such copolymers can be found in "Liquid Crystal Polymers: I Preparation and Properties of p-Hydroxy- benzoic Acid Copolymers, Journal of Polymer Science, Polymer Chemistry Edition, Vol.14, pages 2043 to 2058 (1976), by W.J. Jackson, Jr. and H.F. Kuhfuss. See also our United States Serial Nos. 194,199 filed October 6, 1980 (corresponding to EPA 81304566.3) and 287,345, filed July 27, 1981 (corresponding to EPA 82303939.1).

Representative wholly aromatic and aromatic-aliphatic poly(ester-amides) which exhibit thermotropic liquid crystalline properties are disclosed in United States Patent No.4,272,625 and in our United States Serial Nos. 214,557, filed December 9,1980; (corresponding to EPA 81305784.1); 251,625, filed April 6, 1981 (corresponding to EPA 82301812.2); 251,629 filed April 6, 1981 (corresponding to EPA 82301811.4); 251,818, filed April 7, 1981 (corresponding to EPA 82301813.0); 251,819, filed April 7, 1981 (corresponding to EPA 82301814.8); and 270,439 filed June 4, 1981 (corresponding to EPA 82302834.5)

As discussed hereafter the poly(ester-amide) of United States Serial No. 214,557 (EPA 81305784.1) is particularly preferred for use in the present invention.

Representative aromatic polyazomethines which exhibit thermotropic liquid crystalline properties are disclosed in United States Patent Nos. 3,493,522; 3,493,524; 3,503,729; 3,516,970; 3,516,971; 3,526,611; 4,048,148; and 4,122,070. Specific examples of such polymers include poly(nitrilo-2-methyl-1,4-phenylenenitriloethylidyne -1,4-phenyleneethylidyne); poly-(nitrolo-2-methyl-1,4-Phenylenenitrilomethylidyne-1,4-phenylenemethylidyne); and poly(nitrilo-2-chloro-1, 4-phenylenenitrilomethylidyne -1, 4-phenylenemethylidyne).

Representative aromatic polyester-carbonates which exhibit thermotropic liquid crystalline properties are disclosed in United States Patent Nos. 4,107,143 and 4,284,757, and in our United States Serial No. 319, 024, filed November 6, 1981. Examples of such polymers include those consisting essentially of p-oxybenzoyl units, p-dioxyphenyl units,dioxycarbonyl units, and terephthoyl units.

A thermotropic liquid crystalline polymer commonly is selected for use in the formation of the elongated member of the present invention which possesses a melting temperature within the range that is amenable to melt extrusion while employing commercially available equipment. For instance, thermotropic liquid crystalline polymers commonly are selected which exhibit a melting temperature somewhere within the range of 250 to 400°C.

The thermotropic liquid crystalline polymer selected preferably also exhibits an inherent viscosity of at least 2.0 dl./g. when dissolved in a concentration of 0.1 percent by weight in pentafluorophenol at 60°C. (e.g., an inherent viscosity of approximately 1.0 to 15.0 dl./g.).

A preferred wholly aromatic polyester for use in the present invention is capable of forming an anisotropic melt phase at a temperature below 400°C. and consists essentially of the recurring moieties I,V and VI wherein:

I is 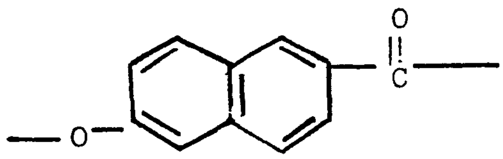

V is a dioxy aryl moiety of the formula -O-Ar-O- where Ar is a divalent radical comprising at least one aromatic ring, and

VI is a dicarboxy arul moiety of the formula

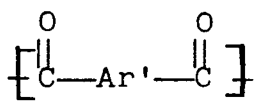

Where Ar' is a divalent radical comprising at least one aromatic ring,

wherein at least some of the hydrogen atoms present upon the rings may optionally be replaced by substituents selected from alkyl groups of 1 to 4 carbon atoms, alkoxy groups of 1 to 4 carbon atoms, halogen, phenyl and mixtures thereof, and wherein the polyester comprises 10 to 90 mole percent of moiety I, 5 to 45 mole percent of moiety II, and 5 to 45 mole percent of moiety III.

The particularly preferred wholly aromatic polyester for use in the present invention is that disclosed in United States Patent No. 4,161,470 which is capable of forming an anisotropic melt phase at a temperature below 350°C. This polyester consists essentially of the recurring moieties I and VII wherein:

I is 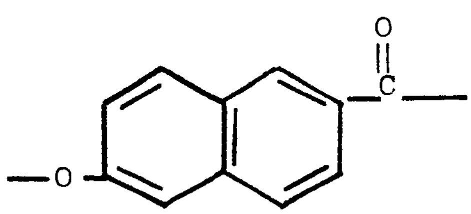 , and

VII is 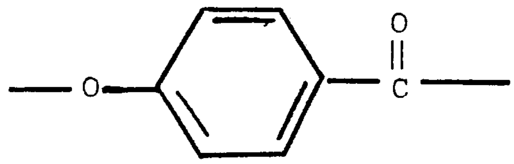

The polyester comprises 10 to 90 mole percent of moiety I, and 10 to 90 mole percent of moiety II. In one embodiment, moiety II is present in a concentration of 65 to 85 mole percent, and preferably in a concentration of 70 to 80 mole percent, e.g., approximately 73 mole percent. In another embodiment, moiety II is in a lesser proportion of 15 to 35 mole percent, and preferably in a concentration of 20 to 30 mole percent. In formulae I and VII, at least some of the hydrogen atoms present upon the rings may optionally be replaced by substituents selected from alkyl groups of 1 to 4 carbon atoms, alkoxy groups of 1 to 4 carbon atoms,halogen, phenyl,substituted phenyl, and mixtures thereof. This polymer preferably has an inherent viscosity of 3.5 to 10 dl./g. when dissolved in a concentration of 0.1 percent by weight in pentafluorophenol at 60°C.

The particularly preferred wholly aromatic poly(ester-amide) or aromatic-aliphatic poly(ester-amide) for use in the present invention is disclosed in EPA 81305784.1 corresponding to our United States Patent Application Serial No. 214,557, filed December 9, 1980. This polymer, which is capable of forming an anisotropic melt phase at a temperature below 400°C is a poly(ester-amide) which consists essentially of recurring moieties I,II,III, and, optionally IV wherein :

I is 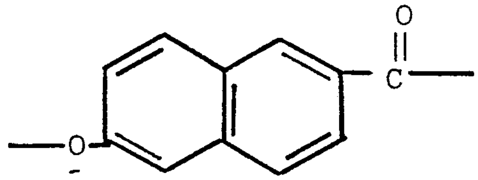

II is 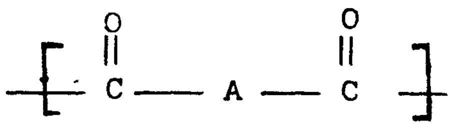 where A is a divalent radical comprising at least one aromatic ring or a divalent <u>trans</u> -1,4-cyclohexylene radical;

III is $-\!\!\left[ Y - Ar - Z \right]\!\!-$, where Ar is a divalent radical comprising at least one aromatic ring, Y is O,NH, or NR, and Z is NH or NR, where R is an alkyl group of 1 to 6 carbon atoms or an aryl group; and

IV is $-\!\!\left[ O - Ar' - O \right]\!\!-$ where Ar' is a divalent radical comprising at least one aromatic ring ;

wherein at least some of the hydrogen atoms present upon the rings may optionally be replaced by substituents selected from alkyl groups of 1 to 4 carbon atoms, alkoxy groups of 1 to 4 carbon atoms, halogen, phenyl,(including substituted phenyl), and mixtures thereof, and wherein said poly(ester-amide) comprises 10 to 90 mole percent of moiety I, 5 to 45 mole percent of moiety III, and 0 to 40 mole percent of moiety IV. The preferred dicarboxy aryl moiety II is :

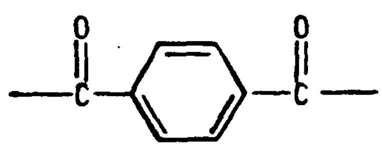

the preferred moiety III is:

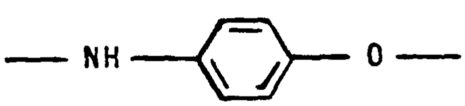 or 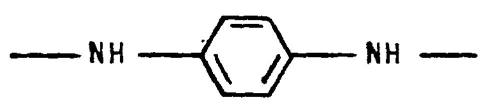,

and the preferred dioxy aryl moiety IV is :

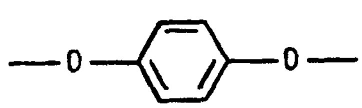

This polymer preferably has an inherent viscosity of 2.0 to 10 dl./g. when dissolved in a concentration of 0.1 percent by weight in pentafluorophenol at 60°C.

Another important component of the molding compositions employed in accordance with the present invention is a filler material which is substantially uniformly dispersed in the melt-processable liquid crystalline polymer previously described and which causes coordination of the linear coefficient of thermal expansion with the particular optical fiber contained in the components contemplated. As used herein, the term "filler" or "filler material" connotes either particulate or fiber or fiber-like materials such as fibrids, fibrils,whiskers and the like. Such fillers can have the effect of reinforcement, conduction, cost reduction,coloring, lubrication, adhesion promotion, etc.

Typical fiber-like fillers include, by way of example: aluminum nitride fibers and whiskers, wollastonite,glass fibers, asbestos,graphitic carbon fibers, amorphous carbon fibers, synthetic polymeric fibers (for example, polyimide, polyamide, polyetheretherketone fibers and the like), aluminum fibers, aluminum silicate fibers, oxide of aluminum fibers, other ceramic fibers, glass or carbon fibers,titanium fibers, magnesium fibers, rock wool fibers, steel fibers, tungsten fibers, cotton, wool,and wood cellulose fibers.

Particulate filler materials include, by way of example: calcium silicate, aluminum silicate,silica (for example, fused silica), kaolin, clays,talc,mica,polytetrafluoroethylene,graphite, aluminum trihydrate, sodium aluminum carbonate, calcium carbonate, barium ferrite, hollow or solid glass beads, barium or calcium sulfate, aluminum nitride powder, aluminum oxide, magnesium oxide, silicon carbide, tungsten carbide, molybdenum disulfide, metal powders,aluminum flakes, nepheline syenite, novaculite, diatomaceous earths, tripoli and the like. Colorants

(for example, pigments, carbon black, and the like) may be used as or in addition to the fillers.

The weight average particle size of the filler material is preferably 1 to 300 microns with at least 99 percent by weight of the articles being below 500 microns, preferably below 300, most preferably 100. Suitable particle size analyzers for use when making such particle size determination are available from Micrometrics Instrument Corporation of Norcross, Georgia and the Leeds and Northrup Corporation of St. Petersburg, Florida (Microtrac(Trade Mark) particle size analyzer). Such filler material also preferably exhibits substantially the same dimensions in all directions so as to eliminate the possible creation of anisotropy in thermal expansion following the molding of the particles in an aligned configuration. Accordingly, the filler material preferably has an average aspect ratio of no more than 40 to 1, as determined by conventional optical microscopy.

The filler material should of course be free of deleterious levels of contamination which would harm or interfere with the operation of the optical fiber devices, and it preferably has as low a linear coefficient of thermal expansion as possible. Accordingly, a suitable linear coefficient of thermal expansion for the filler material will be less than 15 micrometer/meter-°C and preferably less than 10 micrometer/meter-°C. Typical values are as follows:

| Filler Material | Linear Coefficient of Thermal Expansion Micrometer/meter-°C |
|---|---|
| Wollastonite | 6.5 |
| Mica | 8 |
| Silica (polycrystalline) | 10 |
| Silica (fused) | 0.3 |
| Kaolin | 8 |
| Talc | 8 |

Wollastonite and fused silica are particularly preferred particulate inorganic material for use in the present invention.

The wollastonite fibrils used in the present invention generally have an average aspect ratio of 1-40 to 1, more preferably about 3-20 to 1, and most preferably about 20 to 1. Suitable wollastonite fibrils are available commercially from various sources. A particularly useful wollastonite fiber has an average diameter of about 3.5 microns and an average aspect ratio of about 20 to 1.

The fused silica used herein is composed of a relatively pure form of silicon dioxide which has been converted by means of very high temperatures (commonly involving electric arc melting) from its usual crystalline form to an amorphous form. Such inorganic particulate material is sometimes called fused quartz. The resulting fused particles following their formation may be ground to the desired particle size. Such material exhibits a volumetric linear coefficient of thermal expansion which approaches zero, and can undergo rapid and extreme termperature changes without creating internal stresses. Such fused silica is commercially available, and may be obtained from Harbison-Walker Refractories of Pittsburgh, Pennsylvania,under the designation GP71. Minor amounts of crystalline silica may be blended with the fused silica in order further to increase its thermal conductivity, if desired.

In some applications, colorants (for example pigments, carbon black and the like), may be employed in conjunction with the filled or unfilled liquid crystalline polymeric molding materials utilized in the present invention. Generally, any colorant may be employed when minute amounts are utilized. However, when larger amounts are employed, i.e. about five percent by weight, it is important that the colorants be thermally stable at the molding temperatures utilized, e.g. from 250°C to 400°C, and exhibit a linear coefficient of thermal expansion similar to the

particulate material utilized, i.e., have a linear coefficient of thermal expansion of less than 15 micrometer/meter -°C,preferably less than 10 micrometer/meter-°C.

Other additives, adhesion promoters, lubricants, etc. may be included so long as they do not deleteriously influence the composition.

In a preferred embodiment the filler material additionally bears a coating upon its surface which increases its ability to admix with the melt processable polymer which is capable of forming an anisotropic melt phase. Any coating selected must be incapbale of harming the optical fiber component or interfering with its operation during transmission of light.

While not essential, it is preferred that the filler be treated with a titanate coupling agent. One coupling agent which has been used successfully is isopropyl tri(dioctylpyrophosphate)-titanate, although fillers treated with other coupling agents or other surface treatments can be purchased from commercial suppliers.

Other representative coatings are the silanes such as gamma-glycidoxypropyltrimethoxysilane and gamma-aminopropyltriethoxysilane available from the Union Carbide Corporation under the designations A187 and A1100, respectively.

The surface coatings may be applied to the filler material in concentrations which are generally from 0.25 to 1.5 percent by weight in accordance with standard coating technology for mineral fillers.

In accordance with the concept of the present invention, the filler material is blended with and substantially uniformly dispersed within the liquid crystalline polymer in a concentration of 5 to 60 percent, preferably 10 to 30 percent, by weight based upon the total weight of the molding composition. Such substantially uniform dispersal may be accomplished by known techniques wherein the filler material is forced within the moving molten polymeric material. Known melt compounding techniques, for

example those using single screw extruders, co-rotating twin screw extruders, counter-rotating twin screw extruders, or kneaders, may be employed. For instance, a co-rotating twin screw extruder manufactured by Werner & Pfleiderer Corporation of Ramsey, New Jersey may be employed. When using such equipment, preformed polymer pellets and the filler material may be simply fed as a dry blend into the extruder and heated to above the melting temperature of the polymeric material. Kneading blocks advantageously may be included within the screw to aid in the blending. When introducing the filler material at high concentration levels, a multiple pass (i.e., a two or more pass) blending operation may be employed with only a portion of the filler material being introduced during the first pass. Alternatively,the blend of anisotropic melt-forming polymer and the filler material can be prepared by adding the entire volume of filler material to the molten polymer by feeding the particles into one or more feed ports located downstream on a compounding extruder, such as a Buss-Condux Kneader manufactured by Buss-Condux of Elk Grove Village, Illinois,or other extruder capable of downstream addition of particles. Using this procedure,the polymer is fed into the rear of the extruder, melted, and then blended with the filler particles. With either type of blending process, the resulting molding compositions may be pelletized using either a strand or a die-face pelletizing procedure. With a strand procedure, a strand of the resulting molding composition may be extruded and pelletized following passage through an air or water quench. With a cutter, the molding composition may be cut into pellets at the face of the die,with the pellets then being dropped into water to cool. The resulting molding composition commonly is capable of being injection molded at a temperature within the range of 250 to 400°C.

The following Examples are specific illustrations of the invention. The invention is of course not limited to the specific details set forth in the Examples.

## EXAMPLE 1

A wholly aromatic polyester which exhibits thermotropic liquid crystalline properties was selected for use in the formation of an injection molded article in accordance with the present invention. The wholly aromatic polyester was formed in accordance with the teachings of U.S. Patent No. 4,161,470, and consisted of 73 mole percent of recurring p-oxybenzoyl units and 27 mole percent of recurring 6-oxy-2-naphthoyl units. The wholly aromatic polyester exhibited an inherent viscosity of 6.0 dl./g. when dissolved in a concentration of 0.1 percent by weight in pentafluorophenol at 60°C., and had a differential scanning calorimetry melting temperature peak of about 280°C.

The above wholly aromatic polyester was used to prepare the various samples used for testing. Blending with the various wollastonite fibers at 15 weight percent of fiber and various carbon blacks at 5 weight percent of carbon black was accomplished on a co-rotating twin screw extruder (30mm ZSK, manufactured by Werner-Pfleiderer). The carbon black was initially masterbatched with the liquid crystalline polymer (LCP) (Runs 1A & B & 2A & B) and the wollastonite was subsequently dispersed (Runs 1C-I and 2C-H). The extrusion was accomplished at a cylinder temperature of 300°C. a percent torque between about 25 and 40, using various rpm's, and a vacuum of 30 inches when fillers were being added. The unfilled wholly aromatic polyester was put through the same blending process as the fiber containing wholly aromatic polyester to insure that all samples had been subjected to the same treatment. The composition of the various samples is shown in Table I:

**TABLE I**

| Sample | Black Pearls | Compounding Process | Screw Speed rpm |
|---|---|---|---|
| 1A | 880 | MB 20% in LCP | 100 |
| 1B | 880 | MB 20% in LCP | 150 |
| 1C | 880 | LD of 1A 5% + 15% Wol. | 150 |
| 1D | 880 | LD of 1A 5% + 15% Wol. | 200 |
| 1E | 880 | LD of 1A 5% + 15% Wol. | 250 |
| 1F | 880 | LD of 1B 5% + 15% Wol. | 200 |
| 1G | 880 | LD of 1B 5% + 15% Wol. | 250 |
| 1H | 880 | Str.Disp. 5% CB + 15% Wol. | 150 |
| 1I | 880 | Str.Disp. 5% CB + 15% Wol. | 200 |
| 2A | L | MB 20% in LCP | 150 |
| 2B | L | MB 20% in LCP | 200 |
| 2C | L | LD of 2A 5% + 15% Wol. | 150 |
| 2D | L | LD of 2A 5% + 15% Wol. | 200 |
| 2E | L | LD of 2A 5% + 15% Wol. | 250 |
| 2F | L | LD of 2B 5% + 15% Wol. | 200 |
| 2G | L | LD of 2B 5% + 15% Wol. | 250 |
| 2H | L | LD of 2B 5% + 15% Wol. | 150 |

MB = Masterbatch, LD = Letdown, Str.Disp.= Straight Dispersion

Wol. = G Wollastokup KR 38-2, CB = Carbon Black

The wollastonite fibers were purchased from Nyco, Inc., Willsboro, New York. The commercial designation is G Wollastokup KR 38-2. The carbon black was purchased from Cabot Corporation, Boston, Massachusetts. The commercial designations are Black Pearls 880 and Black Pearls L.

After extrusion, samples of each of the above (except for samples 1A, 1B, 2A and 2B) were dried in a vacuum oven overnight at 120°C, then injection molded at 300°C on an 5.0 oz. Windsor injection molding machine under the following molding conditions:

| | |
|---|---|
| Cylinder Temperature | |
| Rear (°C) | 300 |
| Center | 300 |
| Front | 300 |
| Nozzle | 300 |
| Molded Temperature (°C) | 80 |
| Cycle Time (seconds) | |
| Injection | 10 |
| Cooling | 20 |
| Delay | 3 |
| Total | 33 |
| Screw rpm | 250 |
| Injection Pressure (psi) | 8000 |

The resulting bars had configurations of standard molding bars according to ASTM specifications for the tests set forth below.

In order to demonstrate the effect on mechanical properties of the loading of wollastonite fibers (with carbon black) in liquid crystalline polymer, the following tests were performed.

Tensile strength and tensile modulus were tested in accordance with ASTM D-638. Flexural strength and flexural modulus were tested in accordance with ASTM D-790. Notched Izods impact strength was tested according to ASTM D-256.

The results of these tests are shown in Table II:

TABLE II

| Tensile Properties: | | | | Flexural Properties: | | |
|---|---|---|---|---|---|---|
| Sample | Modulus KKpsi | Strength Kpsi | Elongation % | Sample | Modulus KKpsi | Izod Impact ft-lbs/in |
| 1C | 1.51 | 23.2 | 4.0 | 1C | 1.43 | 3.4 |
| 1D | 1.51 | 24.0 | 4.2 | 1D | 1.43 | 3.4 |
| 1E | 1.50 | 24.6 | 4.5 | 1E | 1.42 | 3.4 |
| 1F | 1.47 | 24.4 | 4.7 | 1F | 1.37 | 3.0 |
| 1G | 1.43 | 25.1 | 4.8 | 1G | 1.36 | 3.4 |
| 1H | 1.39 | 21.9 | 4.8 | 1H | 1.34 | 3.0 |
| 1I | 1.42 | 23.4 | 5.0 | 1I | 1.38 | 3.0 |
| 2C | 1.56 | 24.5 | 4.5 | 2C | 1.48 | 3.5 |
| 2D | 1.56 | 25.2 | 4.8 | 2D | 1.43 | 2.9 |
| 2E | 1.54 | 25.9 | 4.7 | 2E | 1.39 | 4.0 |
| 2F | 1.59 | 23.1 | 4.4 | 2F | 1.53 | 3.0 |
| 2G | 1.50 | 24.3 | 4.7 | 2G | 1.44 | 3.0 |
| 2H | 1.47 | 25.1 | 4.8 | 2H | 1.39 | 3.5 |

The linear coefficient of thermal expansion (LCTE) was evaluated by cutting 1/8" cubic samples from the side edge of different flex bars. The results of the LCTE measurement are presented in Table III and indicate that the LCTE could be maintained within the preferred range (-3 to +6 micrometer/meter-°C).

## TABLE III

REQUIREMENTS

*Linear Coefficient of thermal expansion: -5 to 10 micrometer/meter-°C, preferably -3 to +6 micrometer/meter-°C over a range c from -50 to +85°C

| Sample | Black Pearls | LCTE micrometer/meter-°C | Standard Deviation (micrometer/meter-°C |
|---|---|---|---|
| 1D | 880 | 1.22 | 0.69 |
| 1F | 880 | 4.11 | 0.54 |
| 1I | 880 | 1.96 | 0.16 |
| 2D | L | 2.34 | 1.09 |
| 2F | L | 5.24 | 0.94 |

## EXAMPLE 2

Example 1 was substantially repeated with the exception that a wholly aromatic poly(ester-amide) which exhibits thermotropic liquid crystalline properties was substituted for the wholly aromatic polyester of Example 1 and different extrusion conditions were employed. More specifically, the wholly aromatic poly(ester-amide) was formed in accordance with the teachings of commonly assigned United States Patent 4,330,457, issued May 18, 1982, and was derived from 60 mole percent of 6-hydroxy-2-naphthoic acid, 20 mole percent of terephthalic acid, and 20 mole percent of p-aminophenol. The wholly aromatic poly(ester-amide) exhibited an inherent viscosity of 4.41 dl./g. when dissolved in a concentration of 0.1 percent by weight in pentafluorophenol at 60°C., and a differential scanning calorimetry melting temperature peak of 284°C.

Molded articles fabricated from polymers prepared by the procedures of Examples 1 and 2 were exposed to Cobalt-60 gamma radiation in doses of 25, 100, 250 and 500 megarads. The dosage rate was 1.2 megarads/hour at ambient temperature. As indicated in Table IV, no deleterious effect was seen on tensile or flexural properties when exposed to 500 megarads of radiation. A 500 megarad exposure reduced the heat deflection temperature (HDT) by about 10°C.

The I.V. increased by 10% after 500 megarads exposure suggesting that some cross-linking was occurring.

## TABLE IV

EFFECT OF RADIATION ON PHYSICAL PROPERTIES OF MOLDED

LIQUID CRYSTALLINE POLYMERS

POLYMER OF EXAMPLE 1

| DOSAGE (MRADS) | TENSILE MODULUS (MPSI) | TENSILE STRENGTH (KPSI) | ELONGATION (%) | FLEXURAL MODULUS (MPSI) | FLEXURAL STRENGTH (KPSI) | HDT (°C) | IV (DL/ |
|---|---|---|---|---|---|---|---|
| 0 | 1.5 | 27.1 | 4.38 | 1.2 | 22.9 | 182 | 6.5 |
| 25 | 1.5 | 26.0 | 3.84 | 1.3 | 23.4 | 180 | |
| 100 | 1.5 | 25.8 | 3.92 | 1.3 | 23.2 | 180 | |
| 250 | 1.6 | 25.9 | 3.84 | 1.4 | 23.1 | 180 | |
| 500 | 1.6 | 26.3 | 3.94 | 1.5 | 23.4 | 169 | 7.3 |

POLYMER OF EXAMPLE 2

| DOSAGE (MRADS) | TENSILE MODULUS (MPSI) | TENSILE STRENGTH (KPSI) | ELONGATION (%) | FLEXURAL MODULUS (MPSI) | FLEXURAL STRENGTH (KPSI) | HDT (°C) | IV (DL/ |
|---|---|---|---|---|---|---|---|
| 0 | 2.7 | 26.6 | 1.25 | 2.0 | 34.1 | 200 | 5.4 |
| 25 | 2.7 | 25.9 | 1.25 | 2.0 | 34.7 | 200 | |
| 100 | 2.7 | 28.0 | 1.39 | 2.0 | 33.7 | 200 | |
| 250 | 2.8 | 27.9 | 1.31 | 2.2 | 33.9 | 197 | |
| 500 | 2.7 | 27.8 | 1.29 | 2.2 | 35.1 | 190 | 5.9 |

## EXAMPLE 3

A liquid crystalline polymer similar to that prepared in Example 1 was compounded with 15 weight percent G Wollastokup KR38-2 (Nyco) and 5 weight percent Black Pearls 880 carbon black (Cabot).

The resulting resin was molded into an optical coupler on a Windsor injection molding machine under the conditions set forth in Table V. The excellent resultant linear coefficients of thermal expansions and warpages are set forth therein.

## TABLE V

| CONDITIONS | (1) | (2) | (3) | (4) | (5) |
|---|---|---|---|---|---|
| Cylinder Temp. (°C) | 270 | 270 | 280 | 280 | 270 |
| Mold Temp. (°C) | 60 | 60 | 60 | 60 | 80 |
| Dwell Time (sec) | 9 | 9 | 9 | 9 | 9 |
| Cooling Time (sec) | 17.5 | 17.5 | 17.5 | 17.5 | 17.5 |
| Total Cycle (sec) | 30.0 | 30.0 | 30.0 | 30.0 | 30.8 |
| Screw Speed (rpm) | 80 | 160 | 80 | 160 | 80 |
| Inj. Pressure (psi) | 9600 | 9600 | 9600 | 9600 | 9600 |
| Warpage* (mils) | 0.0 | 0.0 | 0.0 | 0.0 | 0.0 |
| CTE micrometer/meter-°C | 1.95 | 1.76 | 2.39 | 1.09 | 1.44 |
| St. Dev. micrometer/meter-°C | 1.08 | 1.11 | 1.37 | 0.59 | 0.90 |
| Hysteresis (-5 to +120°C) | | | | | |
| CTE micrometer/meter-°C | 1.94 | 1.66 | 2.62 | 0.64 | 0.37 |
| St. Dev. micrometer/meter-°C | 0.52 | 0.58 | 0.34 | 0.15 | 0.06 |

*"warpage" = (h-t) mils and is caused by internal residual stresses
where h = maximum height of the sample in mils
t = thickness of the sample in mils
and where sample length was about 2 inches

## CLAIMS

1. A component for joining or terminating optical fibers which is a polymer molding, characterized in that the polymer is a thermotropic liquid crystalline polymer which has a linear coefficient of thermal expansion of from -5 to 10 micrometer/meter-°C at a temperature range of from -50°C to + 85°C.

2. The optical fiber component of claim 1 characterized in that the liquid crystalline polymer contains a filler material in an amount from 5 to 60 percent by weight of the total composition.

3. The optical fiber component of claim 2 wherein the filler is wollastonite or fused silica.

4. The optical fiber component of any of claims 1-3 characterized in that it contains a colorant.

5. The optical fiber component of any of claims 1-4 wherein the thermotropic liquid crystalline polymer has an inherent viscosity of from 1.0 to 15 dl./g. when dissolved in a concentration of 0.1 percent by weight of pentafluorophenol at 60°C.

6. The optical fiber component of any of claims 1-5 wherein the thermotropic liquid crystalline polymer is selected from wholly aromatic polyesters, aromatic-aliphatic polyesters, wholly aromatic poly(ester-amides), aromatic-aliphatic poly (ester-amides), aromatic polyazomethines, aromatic polyester-carbonates, and mixtures thereof.

7. The optical fiber component of claim 6 wherein the thermotropic liquid crystalline polymer is a melt processable poly(ester-amide) capable of forming an anisotropic melt phase at a temperature below 400°C.consisting essentially of recurring moieties I,II,III, and, optionally, IV, wherein:

I is 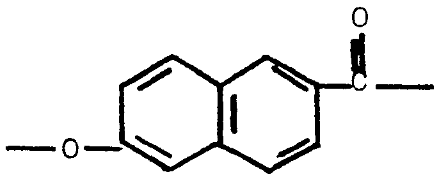

II is 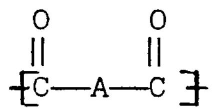 , where A is a divalent radical comprising at least one aromatic ring or a divalent trans-1, 4-cyclohexylene radical;

III is [Y-AR-X], where Ar is a divalent radical comprising at least one aromatic ring, Y is O, NH, or NR, and Z is NH or NR, where R is an alkyl group of 1 to 6 carbon atoms or an aryl group; and

IV is [O-AR'-O] where Ar' is a divalent radical comprising at least one aromatic ring;

wherein at least some of the hydrogen atoms present upon the rings may be optionally replaced by substituents selected from alkyl groups of 1 to 4 carbon atoms, alkoxy groups of 1 to 4 carbon atoms, halogen, phenyl, and mixtures thereof, and wherein the said poly (ester-amide) comprises 10 to 90 mole percent of moiety I, 5 to 45 mole percent of moiety II, 5 to 45 mole percent of moiety III,5 to 45 mole percent of moiety IV.

8. The optical fiber component of claim 6 wherein the thermotropic liquid crystalline polymer is a melt processable wholly aromatic polyester capable of forming an anisotropic melt phase at a temperature below 400°C. consisting essentially of recurring moieties. I,V and VI, wherein:

I is 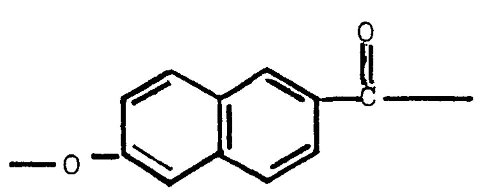

V is a dioxy aryl moiety of the formula -O-Ar-O- where Ar is a divalent radical comprising at least one aromatic ring, and

VI is a dicarboxy aryl moiety of the formula

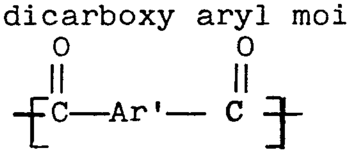

where Ar' is a divalent radical comprising at least one aromatic ring ;

wherein at least some of the hydrogen atoms present upon the rings may optionally be replaced by substituents selected from alkyl groups of 1 to 4 carbon atoms, alkoxy groups of 1 to 4 carbon atoms, halogen, phenyl, and mixtures thereof, and wherein the polyester comprises 10 to 90 mole percent of moiety I, 5 to 45 mole percent of moiety V, and 5 to 45 mole percent of moiety VI.

9. The optical fiber component of claim 6 wherein the thermotropic liquid crystalline polymer is a melt processable wholly aromatic polyester capable of forming a thermotropic melt phase at a temperature below 350°C. consisting essentially of the recurring moieties I and VII,

I is 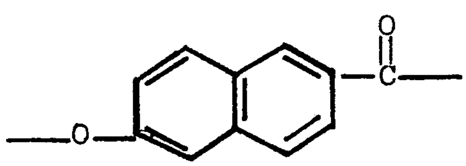 , and

VII is 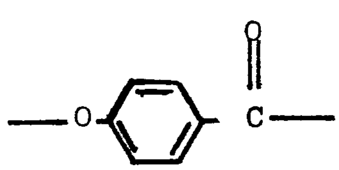 ,

wherein at least some of the hydrogen atoms present upon the rings may optionally be replaced by substituents selected from alkyl groups of 1 to 4 carbon atoms, alkoxy groups of 1 to 4 carbon atoms, halogen, phenyl, and mixtures thereof, and wherein the polyester comprises 10 to 90 mole percent of moiety I, and 10 to 90 percent of moiety VII.

10. A component for joining or terminating optical fibers which is molded from a polymer and which has at least one optical fiber positioned therein characterized in the said polymer is a liquid crystalline polymer which has a linear coefficient of linear thermal expansion substantially equal to that of the optical fiber.

11. The optical fiber component of claim 10 wherein the optical fiber contained in the component is aligned axially with the flow direction of the molded liquid crystalline polymer.

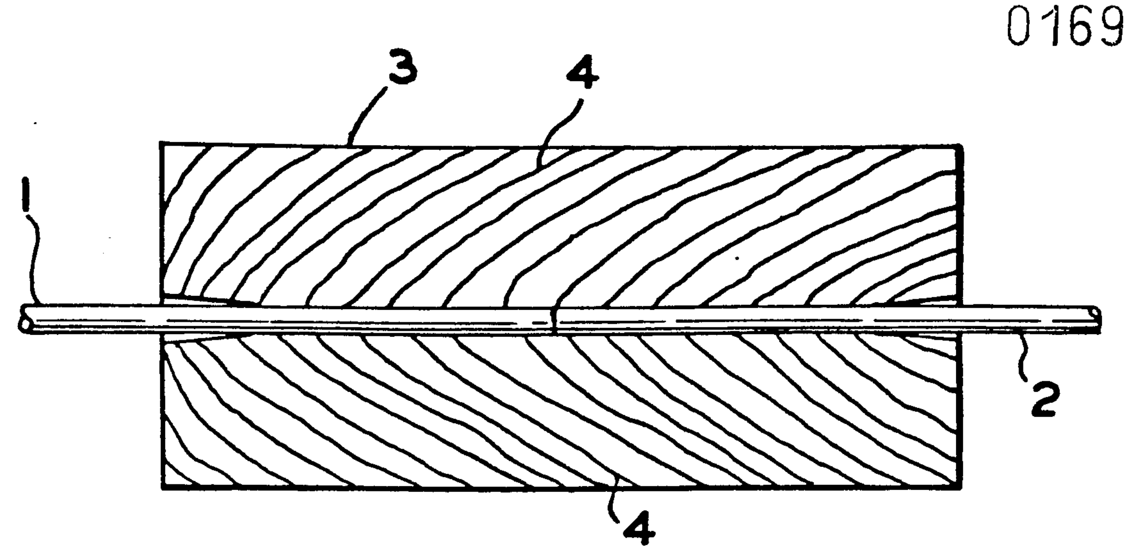


Fig. 1

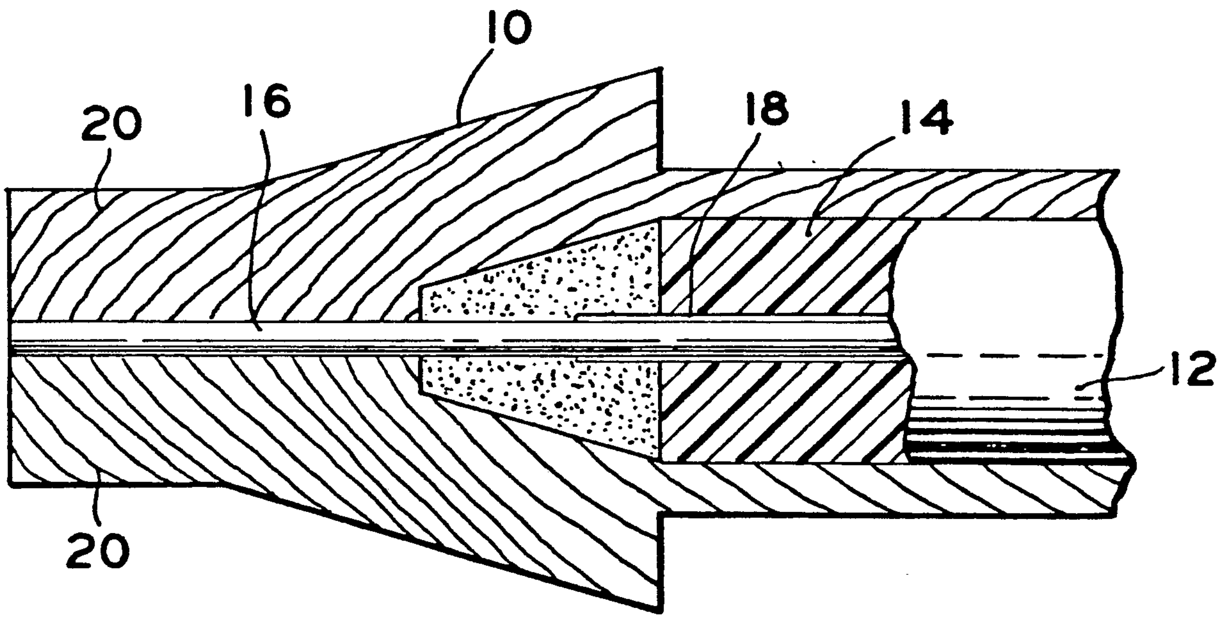


Fig. 2